# EUROPEAN PATENT APPLICATION

(11) **EP 0 771 001 A1**
(43) Date of publication of application: **02.05.1997**
(21) Application number: 96913730.6
(22) Date of filing: 10.05.1996
(51) Int. Cl.: G11B 21/02

(54) **ACTUATOR OF DISK APPARATUS, INTERMEDIATE PRODUCT OF ITS ARM, AND THEIR PRODUCTION METHOD**

(30) Priority: 10.05.1995 JP 135756/95; 13.06.1995 JP 169356/95; 29.02.1996 JP 67474/96
(71) Applicant: NIPPON PETROCHEMICALS CO., LTD., Tokyo 100 (JP)
(72) Inventor: TANAKA, Kenji, Kanagawa 229 (JP); MOTOI, Ken, Gumma 373 (JP); IWATAKI, Yukio, Tokyo 145 (JP)
(74) Representative: Strehl Schübel-Hopf Groening & Partner
(86) International application number: JP9601250
(87) International publication number: WO9636049

(57) **Abstract**

In manufacturing an arm body having arm portions and used for an actuator in a disk unit, a thermoplastic resin in the molten state is injection molded into the arm so that at least the arm portions are simultaneously and integrally molded with the arm body. The resin is simultaneously and in parallel filled in cavities corresponding to the arm portions to be molded. Resin connection portions typified by a common sprue and runners are formed between the arm portions. In order to simultaneously and in parallel fill the resin in the cavities in the mold, the resin is ejected from the position corresponding to the distal end portion of any arm portion to be molded in the mold. An intermediate product of this arm has at least one resin connection portion which connects the arm portions to each other. After this intermediate product is heat treated, the resin connection portion is cut for removal thereby to obtain an arm.

## Description

### Technical Field

The present invention relates to a swing-type actuator used in a fixed magnetic disk unit or the like to drive a magnetic head along an arcuated track, an intermediate product of an arm used for the actuator, and a method of manufacturing the actuator and the intermediate product.

### Background Art

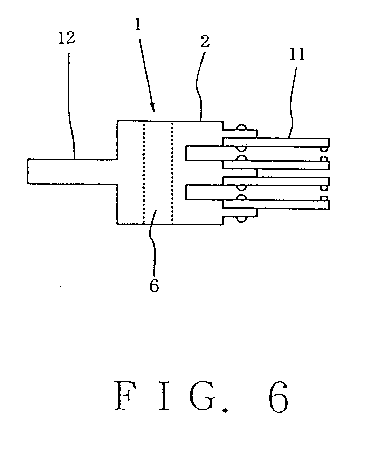

As shown in Fig. 6, a conventional swing type actuator normally comprises a multistoried arm 1 having a plurality of arm portions 2, and a coil portion 12 having a movable coil for swinging the arm about a shaft hole 6. Suspensions 11 called head suspensions having functional members such as magnetic heads are attached to the distal ends of the arm portions 2, respectively. The arm 1 is made of a metal such as aluminum.

The movable coil is a coil obtained by winding a conductive wire having an insulating film thereon. When a current is supplied to the coil, a driving force acts on the coil by the left-hand rule, i.e., by the action of a magnetic circuit (not shown) using a permanent magnet (not shown), thereby swinging the arm 1 about the shaft hole 6.

In order to satisfy recent requirements for an increase in recording density and access speed, a demand has arisen for a lightweight arm to improve positioning accuracy and increase the positioning speed of an actuator. Proposals have been made to make up arms from resins (U.S. Patent Nos. 5,165,090 and 5,382,851; "Switch Type Actuators"). In such proposals, an arm is fabricated by preparing arm portions singly by molding and then connecting the resultant arm portions in a stacking relation so as to constitute a multistoried arm.

In particular, a recent demand for an increase in recording capacity in a fixed magnetic disk and any other fixed disk recording device is satisfied by increasing the number of disks. As the arm portions in the actuator are arranged for the disks in a one-to-one correspondence relation, the number of arm portions must be inevitably increased. Most of the metal arms have three or more arm portions, and some metal arms have two to 20 arm portions. For example, when the number of arm portions is three, the arm may be called an E-block because its sectional shape is similar to letter E.

In any conventional proposal of having an actuator arm made of a resin, arm portions are molded separately one by one, and the resultant arm portions are fixed together by an appropriate method to constitute an arm. It is difficult to integrally and simultaneously mold an arm having a plurality of arm portions due to the following reason. The arm portions must be strictly parallel to each other, and this is difficult to realize accurately. In addition, a strict dimensional accuracy is required for the positional relationship (e.g., intervals between the arm portions) between the arm portions, particularly, the distal ends (i.e., the side on which functional members such as magnetic heads are mounted) of the arm portions. More specifically, in injection molding using a thermoplastic resin, a molded body is removed from the mold once the resin hardens. Even if the resin has hardened completely, an internal stress tends to remain in a resin-molded body having a complicated shape. The presence of the residual stress gives rise to changes in dimensions of the molded body. Highly accurate dimensions are required for the actuator for a disk drive because the actuator is high-precision equipment.

Highly accurate dimensions are required for the molded body as a product, as a matter of course. For this reason, a heat treatment as an aftertreatment often performed to remove residual stress or the like is normally performed on a molded body in the shape closest to the form of a product to be obtained. For example, in injection molding for producing a resin-molded body, portions unnecessary for products, such as runners and sprues, are cut or removed to obtain molded bodies as products, and a heat treatment as an aftertreatment is normally performed on these molded bodies.

It is an object of the present invention to provide, in consideration of the problems of the prior arts, an actuator obtainable at a low manufacturing cost and excelling in dimensional accuracy and in positional accuracy and mechanical characteristics of arm portions, an intermediate product of this arm, and a method of manufacturing the actuator and the intermediate product. Specifically, the object of the present invention includes the provision of a method of manufacturing a so-called E-block simultaneously and integrally formed by injection molding, the E-block being excellent in relative positional accuracy between a plurality of arm portions thereof.

### Disclosure of the Invention

In order to achieve this object, a method of manufacturing an arm according to the present invention should be such that an arm having a plurality of arm portions for an actuator in a disk unit is manufactured by simultaneously and integrally injection-molding the plurality of arm portions, and said method in thus characterized by simultaneously and in parallel filling a molten thermoplastic resin in a plurality of cavity portions corresponding respectively to the plurality of arm portions. In this manner, each arm portion can be uniformed as a whole, and the arm portions can each be uniformed, thus obtaining an arm excellent in relative positional accuracy between the arm portions. The simultaneous and parallel filing means that the cavity portions respectively for the plurality of arm portions are simultaneously and similarly filled with the molten resin.

The plurality of cavity portions can be simultaneously and in parallel filled with the molten resin by employing, e.g., an arrangement in which a sprue common to the arm portions is employed and the arm portions are connected to each other through the sprue and runners, i.e., a structure having connections between the arm portions. When the sprue common to the arm portions is employed and the molten resin is injected through the sprue and the runners, the molten thermoplastic resin can be simultaneously and in parallel filled in the plurality of cavity portions respectively corresponding to the arm portions.

In injection molding, after a resin is injected from the gate to each cavity portion, there is very often employed so-called pressure retention in which a pressure is applied and kept for a predetermined period of time. The resin can be sufficiently filled in the mold or cavity portions by this pressure retention operation. However, since the pressure is applied through a narrow gate, residual stress is apt to be generated near the gate. The influence of the residual stress may extend to the molded body in contact with the gate in the mold. When the molten resin is filled in the cavity portions taking the precedence of the filling-up properties in the cavity portions, that is, when the molten resin is simultaneously and in parallel filled in the plurality of cavity portions as in the present invention, residual stress is readily generated in the molded body near the gate because the filling-up properties are given priority over the residual stress. To remove the influence of the residual stress near the gate, there may be effectively used a so-called intra-mold gate cutting method in which the gate is cut before the mold opens.

The gate or the like is unnecessary for a product, and must be cut and removed. When the gate is cut after the molded body (including the resin in the gate) sufficiently hardens, it is difficult to avoid the above-mentioned influence of the gate. It is thus appropriate to perform an operation for cutting the gate off the molded body in the mold before the molded body (including the resin in the gate) sufficiently hardens. When the molded body is released from the mold by opening the mold, normally the molded body has sufficiently solidified. If the gate is cut off the molded body before the molded body sufficiently hardens, it follows that the gate cutting is carried out while the molded product is still in the mold (before the molded body is removed upon mold opening). To do this, normally, there is used a method (1) of attaching a gate cut blade to a core, moving the blade with a hydraulic cylinder and cutting a portion between the gate and the molded body in the mold (before the release of the mold), or a method (2) of arranging a gate cut plate and an ejector plate so that the parting line comes to the gate surface, moving the plates and then causing a gate cut pin to cut the gate. The method (1) requires a change in mold itself to cut the gate. The method (2) does not basically require a change in the mold itself because the operation is performed outside the mold, thus being more widely usable. When the gate is cut too early before the molded body cools down and hardens, the molten resin leaks in the worst case. When the gate is cut too late, the resin has perfectly hardened, and the influence of the residual stress near the gate cannot be prevented. In actual molding, timing synchronization of the molding cycle must be established. For this purpose, for example, the following method is employed. The resin pressure in the cavity portion is measured by an appropriate measurement means such as a pressure sensor, a rise of the pressure of the molten resin filled in the cavity portions is obtained, and a predetermined filled state of the cavity portions is confirmed by the rise value. Thereafter, the gate is forcibly cut at an appropriate timing before mold opening.

The plurality of cavity portions can also be simultaneously and in parallel filled with the molten resin by injecting the molten resin from positions corresponding to the distal end portions of the arm portions to be molded in the mold. More specifically, another method of manufacturing an arm according to the present invention is a method of manufacturing an arm having a plurality of arm portions for an actuator in a disk device, characterized by injection molding a thermoplastic resin simultaneously and integrally into the arm portions, the thermoplastic resin being injected from the positions corresponding to the distal end portions of the arm portions to be molded in the mold. In this case, the arm has a shaft hole through which a rotating shaft extends, and has a weld line at a portion opposite to the distal end of the arm with the shaft hole. It is preferable that a projection extending in the direction perpendicular or parallel to the weld line be injection-molded at the outer portion of the shaft hole which is located near the weld line.

An intermediate product of a thermoplastic resin-made arm for an actuator according to the present invention is characterized in that at least one resin coupling portion to be cut or removed is formed between the plurality of arm portions or further characterized in that the intermediate product is heat-treated at a predetermined temperature for a predetermined period of time. The resin-made coupling portion is, e.g., a resin portion present on the resin injection route in injection molding, and is preferably a portion which couples the neighborhoods of the distal ends of the arm portions together.

Another method of manufacturing an arm according to the present invention is characterized by comprising the step of injection molding a resin into an arm molding whose arm portions are coupled together by resin portions unnecessary at this point for a product, which are injection molded simultaneously with injection molding of the arm including the arm portions, the step of removing the arm molding with the arm portions from a mold, the step of heat-treating at a predetermined temperature for a predetermined period of time or sufficiently hardening the arm molding so removed from the mold while the unnecessary resin portions are kept coupled with the arm portions thereby to obtain an intermediate product of the arm, and the step of cutting the unnecessary resin portions from the intermediate product.

An actuator according to the present invention is characterized by comprising an arm obtained by cutting unnecessary resin portions from the above-mentioned intermediate product, and a coil fixed to the arm to apply thereto a force for swinging the arm.

A method of manufacturing an actuator according to the present invention is characterized by comprising the step of injection molding a resin into an arm molding whose arm portions are coupled together by resin unnecessary at this piriod for a product, which are injection molded simultaneously with injection molding of the arm including the arm portions together with a coil for swinging the arm set in a mold, the step of removing the arm molding with the arm portions from the mold, the step of heat-treating at a predetermined temperature for a predetermined period of time or sufficiently hardening the arm molding so removed from the mold while the unnecessary resin portions are kept coupled with the arm portions thereby to obtain an intermediate product of the arm, and the step of cutting the unnecessary resin portions from the intermediate product.

The resin portions present on the resin injection route are a sprue and runners and serve to couple the arm portions together. The relative positional displacement between the arm portions can be reduced by the presence of these coupling portions. For example, the deformation amount of the molding which is caused by an ejector pin for mold release can also be reduced. The coupling portions such as a sprue and runners may have a length, width, thickness, and the like enough to minimize, with aid of their reinforcing effects, deformation caused by the ejector pin, etc. The thickness of the coupling portions is preferably equal to that of each arm portion from the manufacturing viewpoint.

The thermoplastic resins used herein are required to be so-called engineering plastics having a flexural modulus of 8 x 10² kgf/mm² (as defined by ASTMD790) or more because the deformation of an actuator is unlikely to occur when a higher rigid resin is used for the actuator. Examples of the thermoplastic resin are:
a polyamide-based resin such as nylon; a polyacetal-based resin; a polycarbonate-based resin;
modified polyphenylene ether; a polyester-based resin such as polyethylene phthalate or polybutylene phthalate; a polyphenylene sulfide-based resin; a polysulfone-based resin; a polyether ketone-based resin such as polyether ether ketone; a wholly aromatic polyester-based resin such as polyarylate; an ABS-based resin; a polyolefin-based resin such as reinforced polypropylene; and a thermotropic liquid crystal polymer.

A thermotropic liquid crystal polymer used as a preferable thermoplastic resin of all the engineering plastics is a resin exhibiting optical anisotropy in the molten state and is a thermoplastic meltable polymer. A polymer exhibiting optical anisotropy in the molten state has the nature that the polymer molecular chains take a regular parallel arrangement in the molten state. The nature of the optically anisotropic molten phase can be confirmed by a normal polarization testing method utilizing crossed polarizers. A general polymer which does not exhibit anisotropy upon melting is isotropic in the molten state. When a polymer exhibits anisotropy in the melting process, it changes from the solid phase to the isotropic phase through the anisotropic liquid crystal phase.

Mechanical anisotropy can also be confirmed. More specifically, this can further be confirmed by the fact that peeling and fibrillation remarkably occur on the surface of a molded body upon injection molding and that there is a large difference in physical properties between a resin flow direction and a direction perpendicular to it.

A resin exhibiting optical anisotropy in the molten state is generally known as a thermotropic liquid crystal polymer. This thermotropic liquid crystal polymer is manufactured from monomers having a plurality of chain extension bonds which are narrow, flat and highly rigid along the long chain of the molecules and have either a coaxial or parallel relationship.

A preferable example of the thermotropic liquid crystal polymer is a thermotropic liquid crystal polyester. Examples of the thermotropic liquid crystal polyester are liquid crystal polyester and liquid crystal polyester imide; more specifically, (wholly) aromatic polyester, polyester amide and polyester carbonate are exemplified. Any compounds containing a plurality of ester bonds in the molecule can be categorized as a polyester. A more preferable polyester is an aromatic polyester.

The thermotropic liquid crystal polyester which can be used in the present invention also includes a polymer in which part of one polymer chain is composed of a polymer segment forming an anisotropic molten phase and the remaining part is composed of a polymer segment forming no anisotropic molten phase. The above polyester further includes a composite of a plurality of thermotropic liquid crystal polymers.

Typical of the monomers constituting the thermotropic liquid crystal polyester are (a) at least one of aromatic dicarboxylic acids, (b) at least one of aromatic hydroxycarboxylic acid-based compounds, (c) at least one of aromatic diol-based compounds, (d) at least one of (1) aromatic dithiol, (2) aromatic thiophenol and (3) aromatic thiol carboxylic acid-based compounds, and (e) at least one of aromatic hydroxylamine and aromatic diamine-based compounds.

These compounds may be used singly, but very often used in combination such as a combination of (a) and (c), a combination of (a) and (d), a combination of (a), (b) and (c), a combination of (a), (b) and (e), or a combination of (a), (b), (c) and (e).

Examples of the aromatic dicarboxylic acid-based compound (a) are: aromatic dicarboxylic acids such as terephthalic acid, 4,4'-diphenyldicarboxylic acid, 4,4'-triphenyl-dicarboxylic acid, 2,6-naphthalenedicarboxylic acid, 1,4-naphthalenedicarboxylic acid, 2,7-naphthalenedicarboxylic acid, diphenylether-4,4'-dicarboxylic acid, diphenoxyethane-4,4'-dicarboxylic acid, diphenoxybutane-4,4'-dicarboxylic acid, diphenylethane-4,4'-dicarboxylic acid, isophthalicacid, diphenylether-3,3'-dicarboxylic acid, diphenoxyethane-3,3'-dicarboxylic acid, diphenylethane-3,3'-dicarboxylic acid and 1,6-naphthalenedicarboxylic acid; or alkyl-, alkoxy-, or halogen-substituted products of the above aromatic dicarboxylic acids, such as chloroterephthalic acid, dichloroterephthalic acid, bromoterephthalic acid, methylterephthalic acid, dimethylterephalic acid, ethylterephthalic acid, methoxyterephthalic acid and ethoxyterephthalic acid.

Examples of the aromatic hydroxycarboxylic acid-based compound (b) are: aromatic hydroxycarboxylic acids such as 4-hydroxybenzoic acid, 3-hydroxybenzoic acid, 6-hydroxy-2-naphthoic acid, and 6-hydroxy-1-naphthoic acid; or alkyl-, alkoxy- or halogen-substituted products of the aromatic hydroxycarboxylic acids, such as 3-methyl-4-hydroxybenzoic acid, 3,5-dimethyl-4-hydroxybenzoic acid, 2,6-dimethyl-4-hydroxybenzoic acid, 3-methoxy-4-hydroxybenzoic acid, 3,5-dimethoxy-4-hydroxybenzoic acid, 6-hydroxy-5-methyl-2-naphthoic acid, 6-hydroxy-5-methoxy-2-naphthoic acid, 2-chloro-4-hydroxybenzoic acid, 3-chloro-4-hydroxybenzoic acid, 2,3-dichloro-4-hydroxybenzoic acid, 3,5-dichloro-4-hydroxybenzoic acid, 2,5-dichloro-4-hydroxybenzoic acid, 3-bromo-4-hydroxybenzoic acid, 6-hydroxy-5-chloro-2-naphthoic acid, 6-hydroxy-7-chloro-2-naphthoic acid, and 6-hydroxy-5,7-dichloro-2-naphthoic acid.

Examples of the aromatic diol (c) are: aromatic diols such as 4,4'-dihydroxydiphenyl, 3,3'-dihydroxydiphenyl, 4,4'-dihydroxytriphenyl, hydroquinone, resorcin, 2,6-naphthalenediol, 4,4'-dihydroxydiphenyl ether, bis(4-hydroxyphenoxy)ethane, 3,3'-dihydroxydiphenyl ether, 1,6-naphthalenediol, 2,2-bis(4-hydroxyphenyl)propane, and bis(4-hydroxyphenyl)methane; or alkyl-, alkoxy-, or halogen-substituted products of the above aromatic diols, such as chlorohydroquinone, methylhydroquinone, t-butylhydroquinone, phenylhydroquinone, methoxyhydroquinone, phenoxyhydroquinone, 4-chlororesorcin and 4-methylresorcin.

Examples of the aromatic dithiol (d)(1) are benzene-1,4-dithiol, benzene-1,3-dithiol, 2,6-naphthalene-dithiol, and 2,7-naphthalene-dithiol.

Examples of the aromatic thiophenol (d)(2) are 4-mercaptophenol, 3-mercaptophenol and 6-mercaptophenol.

Examples of the aromatic thiol carboxylic acid (d)(3) are 4-mercaptobenzoic acid, 3-mercaptobenzoic acid, 6-mercapto-2-naphthoic acid and 7-mercapto-2-naphthoic acid.

Examples of the aromatic hydroxylamine and the aromatic diamine-based compounds (e) are 4-aminophenol, N-methyl-4-aminophenol, 1,4-phenylenediamine, N-methyl-1,4-phenylenediamine, N,N'-dimethyl-1,4-phenylenediamine, 3-aminophenol, 3-methyl-4-aminophenol, 2-chloro-4-aminophenol, 4-amino-1-naphthol, 4-amino-4'-hydroxydiphenyl, 4-amino-4'-hydroxydiphenyl ether, 4-amino-4'-hydroxydlphenlmethane, 4-amino-4'-hydroxydiphenylsulfide, 4,4'-diaminophenylsulfide(thiodianiline), 4,4'-diaminodiphenylsulfone, 2,5-diaminotoluene, 4,4'-ethylenedianiline, 4,4'-diaminodiphenoxyethane, 4,4'-diaminodiphenylmethane(methylenedianiline) and 4,4'-diaminodiphenyl ether(oxydianiline).

The thermotropic liquid crystal polyester which can be used in the present invention can be manufactured by various esterification methods such as melting acidolysis or slurry polymerization using the above monomers.

The thermotropic liquid crystal polyester suitably used in the present invention has a molecular weight of about 2,000 to 200,000 and preferably about 4,000 to 100,000. The molecular weight can be obtained by measuring the terminal groups of, e.g., a compressed film in accordance with infrared spectroscopy. The molecular weight can be measured using GPC as the general measuring method accompanying solution formation.

Of all thermotropic liquid crystal polymers obtained from the above monomers, an aromatic polyester as a (co)polymer containing as an essential component a monomer unit represented by the following formula (1):

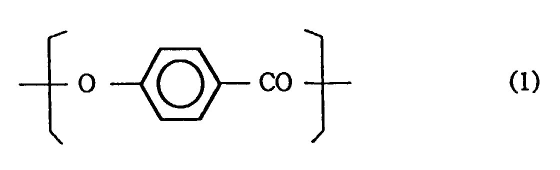

The preferable aromatic polyester which can be used in the present invention is a polyester represented by the following formula (2) and containing repeating units having structures derived respectively from three compounds, p-hydroxybenzoic acid, phthalic acid, and biphenol. The repeating units having the structure derived from the biphenol of formula (2) can be a polyester partially or entirely substituted with the repeating unit derived from dihydroxybenzene. The preferable aromatic polyester can be a polyester represented by formula (3) and having repeating units having structures derived from two compounds, p-hydroxybenzoic acid and hydroxynaphthalinecarboxylic acid:

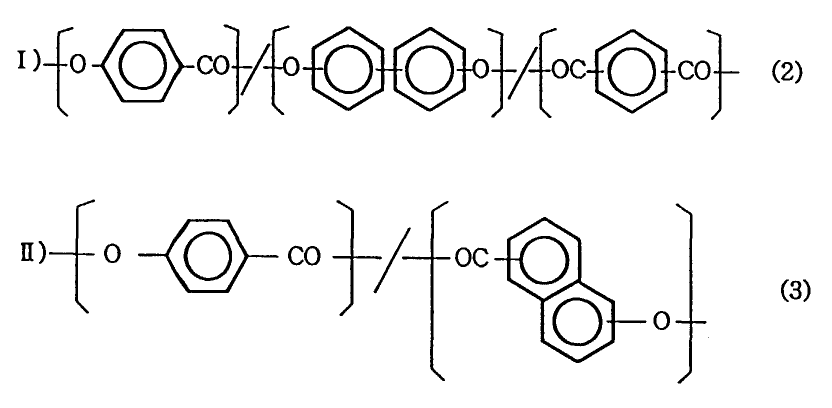

Thermotropic liquid crystal polymers can be used singly or jointly in the present invention.

The thermotripic liquid crystal polymer may be used in admixture with a resin having no liquid crystal properties. The resins to be mixed may be thermoplastic or thermosetting resins and they preferably include so-called thermoplastic engineering plastics (having no liquid crystal properties) such as a polyamide resin, a polycarbonate resin, a polyethyleneterephthalate resin, a polybutyleneterephthalate resin, a polyphenylenesulfide resin, a polyethersulfone resin, a polysulfone resin, a polyether ketone resin, and a polyether ether ketone resin. The amount of the above thermoplastic resin mixed is 1 to 200 parts by weight, preferably 1 to 100 parts by weight and more preferably 1 to 50 parts by weight, per 100 parts by weight of the thermotropic liquid crystal polymer usable in the present invention.

A reinforcing agent or filler can be added to the thermotropic liquid crystal polymer usable in the present invention, to increase the heat-resistance and mechanical characteristics of the polymer. Examples of the reinforcing agent or filler are a fibrous reinforcing agent or filler, a powdered reinforcing agent or filler, or a mixture thereof. Examples of the fibrous reinforcing agent are: inorganic fibers such as glass fibers, volcamic glass-made fibers, alumina fibers, a silicon carbide fibers, ceramic fibers, asbestos fibers, gypsum fibers, and metal fibers (e.g., stainless steel fibers; and carbon fibers (including graphite fibers). Examples of the particulate reinforcing agent are: silicates such as wollastonite, sericite, kaoline, mica, clay, bentonite, asbestos, talc, and alumina silicate; metal oxides such as alumina, silicon oxide, magnesium oxide, zirconium oxide and titanium oxide; carbonates such as calcium carbonate, magnesium carbonate, and dolomite; sulfates such as calcium sulfate, calcium pyrophosphate and barium sulfate; glass beads; boron nitride; sialon carbide; and sialon. The powdered reinforcing agent may be hollow (e.g., hollow glass fibers, a glass microballoons, volcanic glass balloons, and carbon balloons). The above reinforcing agents can be pre-treated with a silane- or titanium-based coupling agent and used, as needed.

The thermoplastic resin such as the thermotropic liquid crystal polymer usable in this invention may be incorporated with conventional additives in such amounts as not to impair the object of this invention. The conventional additives include an antioxidant and heat stabilizer (e.g., hindered phenol, hydroquinone, phosphites, and their substitution products), an ultraviolet absorbent (e.g., resorcinol, salicylate, benzotriazole, and benzophenone), a lubricant, a mold release agent, a colorant including a dye (e.g., nitrocin) and a pigment (e.g., cadmium sulfide, phthalocyanine, and carbon black), a fire retardant, a plasticizer and an antistatic agent. Thereby imparting predetermined properties to said thermoplastic resin. The amounts of the reinforcing agent, the filler, and the like added fall within a range of 80 wt% or less, preferably 70 wt% or less, of the total amount of the resin composition.

In injection molding using the thermotropic liquid crystal polymer, the injection molding conditions are appropriately selected from a resin temperature range of 200 to 420°C and a mold temperature range of 60 to 170°C, more preferably 60 to 130°C, an injection pressure range of 50 to 4,000 kg/cm² and an injection rate range of 5 to 1,000 mm/sec.

A more practical embodiment of an arm is characterized in that the arm has a shaft hole through which a rotating shaft extends, the arm has a weld line at a portion on the outer wall of the shaft hole, the portion being farthest away from the distal end of the arm, and projections extending in the direction perpendicular or parallel to the weld line are formed at the outer portion of the shaft hole which is near the weld line, the projections having been simultaneously formed by the above injection molding.

In an embodiment of an actuator having three or more arm portions or blades according to the present invention, the thickness of two outermost blades is made smaller than that of the inner blades. The thicknesses of the two outermost blades are normally equal to each other, but may be different from each other. The thicknesses of the two or more inner blades may be equal to or different from each other. Let T1 and T2 be the thickness of the inner blade and the thickness of the outer blade, respectively. Then, T1/T2 which is a ratio of the thickness of the inner blade to that of the outer laade is preferably 1.05 to 2.0, and more preferably 1.1 to 2.0. The thickness of the outer or inner blade of each arm portion is appropriately selected from a range of 0.1 to 10 mm. The length of the arm portion normally falls within a range of 1 to 50 cm.

In injection molding, the molten resin flows ejected from gates provided at portions in the cavities wherein the arm portions are to be molded, fill in the cavities and finally merge at a portion which is on the outer wall of the shaft hole and farthest away from said portions in the cavities. Since the cavity of the inner blade having a large depth is filled with the molten resin faster than those of the outer blades each having a large depth, the resin flow flowing through the deeper cavity reaches the merge portion faster.

As opposed to the above structure, when the depth of the outer cavities are large, the resin flow through the outer cavities reaches the merge portion faster than through the inner cavity. For this reason, gas entrapment in the resin is apt to take place at the merge portion, which undesirably results in a decrease of the resulting molding in mechanical strength. Note that gases are generated by the molten resin, the filler, or the like, and, in particular, gases tend to be easily generated from the resin that melts at a higher temperature, that is, an engineering plastics such as a thermotropic liquid crystal polymer, so that care must be particularly taken for entrapment of the gases. Therefore, the above structure is particularly advantageous in case of using the thermotropic liquid crystal polymer.

According to the present invention, an arm body (the wall of the sharft hole, and the protrusion on said wall and near the mold line), and arm portions are simultaneously injection molded. In this case, "simultaneously" means "simultaneously and integrally using one mold". Thus, at least the arm portions are simultaneously and integrally molded. In this case, there have also been simultaneously and integrally molded resin portions which are unnecessary as components of a final product and connect the arm portions with each other. The integrally molded arm removed from the mold is heat-treated at a predetermined temperature for a predetermined period of time or is allowed to sufficiently harden while the unnecessary resin portions are kept coupled to the arm portions, thereby obtaining an intermediate product of the arm. The unnecessary resin portions can be cut off from the intermediate product to obtain the arm. Since the unnecessary resin portions are cut off after the molded arm is heat-treated or sufficiently hardens, deformation and warping of each arm portion can be suppressed, and the arm whose arm portions can be highly precisely parallel to each other can be obtained. Therefore, the resultant arm has a high dimensional accuracy, and its yield can also be increased.

An arm body and arm portions are simultaneously and integrally molded. For this reason, the arm portions need not be stacked to shorten the manufacturing process, and the positional accuracy between the arm portions can also be improved.

In injection molding using a thermoplastic resin, particularly, a thermotropic liquid crystal resin, the resin molecules are oriented in the resin flow direction so that the resin comes to have a linear expansion coefficient close to that of a metal, thereby improving the resulting molding in dimensional accuracy and rigidity.

In case of ejecting a resin from the distal end or its vicinity of an arm portion to be formed in the mold along the longitudinal direction of the arm portion to be formed, the molecules of the thermoplastic resin such as a thermotropic liquid crystal polymer will be oriented in the resin flow direction. In this case, by this orientation action, a fibrous filler (fiber's aspect ratio is preferably 3 or more) incorporated in the polymer is also strongly oriented in the resin flow direction. The various functions of the resin provided with a mechanical reinforcing effect obtained upon mixing the fibrous filler can further be increased by the above orientation. In addition to the mechanical reinforcing effect, the various functions include a decrease in surface resistance, which is obtained when a conductive, fibrous filler is used.

Since a plastic used as a thermoplastic resin is not essentially conductive, conductivity is very often imparted to plastics moldings, particularly electrical parts, for the reasons of electrostatic countermeasures and the like. For this purpose, a conductive filler including a fibrous filler could be mixed in the thermoplastic resin.

Only if a conductive filler is mixed in a thermoplastic resin for being injection molded, the conductive filler itself cannot sufficiently exert its conductivity. As described above, it is accordingly necessary to strongly orient the fibrous, conductive filler. Upon this strong orientation, its conductivity can be greatly improved as compared with a molding obtained by simple injection molding without directivity (without orientation). This conductivity can be determined from the value of the surface resistance of the injection-molded body such as an arm portion.

This purpose can be achieved by using carbon fibers and graphite fibers in addition to metal fibers, inorganic fibers coated with a metal, metal whiskers, and the like. The carbon fibers and the graphite fibers are normally conductive and preferable because their mechanical reinforcing effects can be expected. The amount of these fibrous fillers mixed can be selected from the above range of amount of filler mixed.

### Brief Description of Drawings

Fig. 1 is a plan view showing an intermediate product of an arm embodying the present invention;
Fig. 2 is a sectional view taken along the line A-A in Fig. 1;
Fig. 3 is a plan view showing an intermediate product of an arm according to another embodiment of the present invention;
Fig. 4 is a sectional view taken along the line A-A in Fig. 3;
Fig. 5 is a plan view showing an actuator according to still another embodiment of the present invention;
Fig. 6 is a side view of a conventional actuator;
Fig. 7 is a partial sectional view of an injection molding mold which corresponds to the sectional view of Fig. 4;
Fig. 8 is a sectional view taken along the line A-A in Fig. 7; and
Fig. 9 is a view for explaining a method of measuring a dimensional error in the Examples of the present invention.

### Best Mode of Carrying Out the Invention

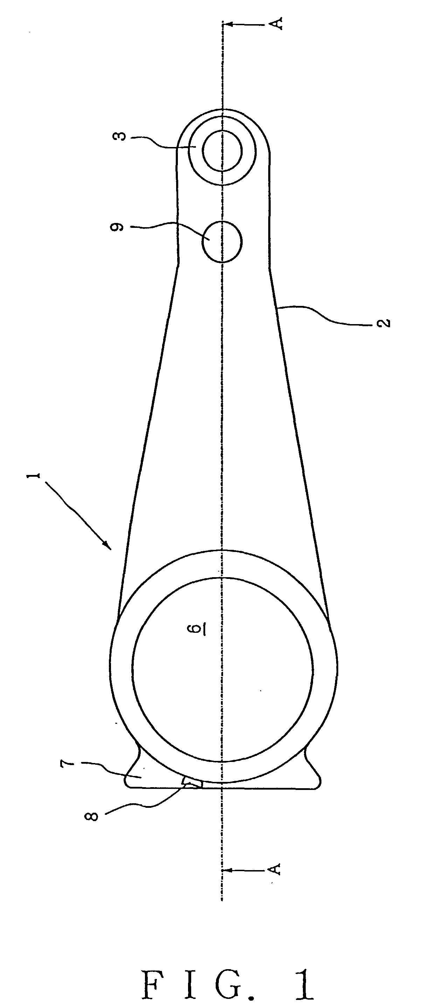

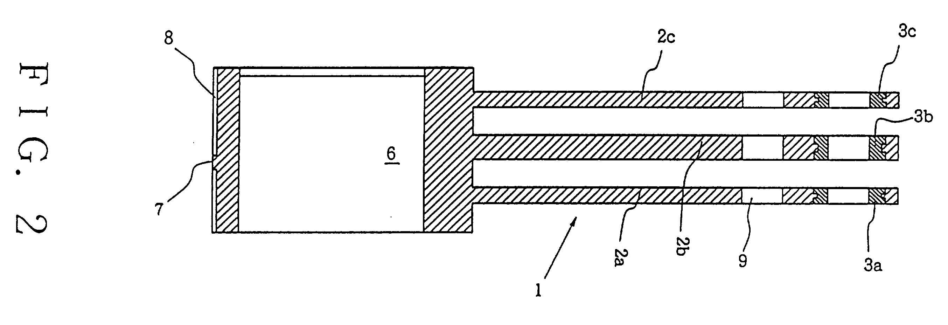

Fig. 1 is a plan view of an arm according to an embodiment of the present invention, and Fig. 2 is a sectional view taken along the line A-A in Fig. 1. Referring to Figs. 1 and 2, reference numeral 1 denotes an arm used in an actuator in a disk unit (not shown). The arm 1 has a plurality of arm portions 2 (2a to 2c) which are integrally molded with a resin.

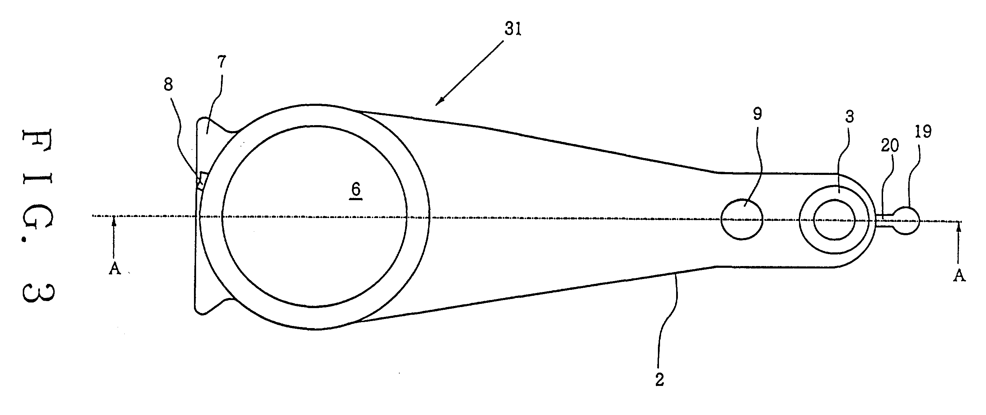

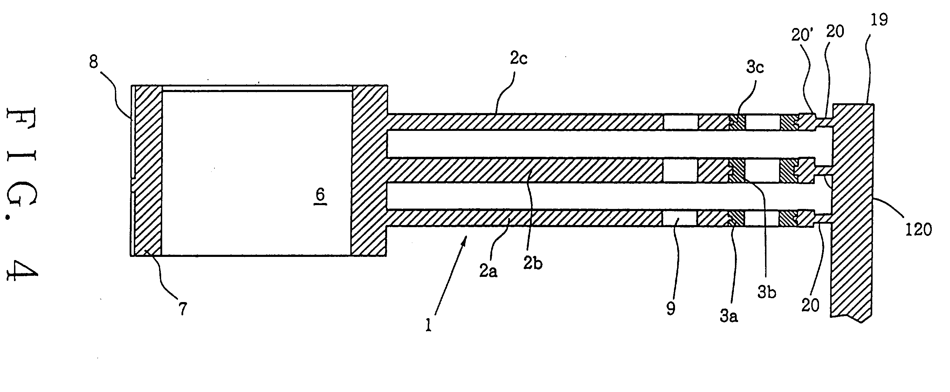

Fig. 3 is a plan view showing the intermediate product of an arm according to another embodiment of the present invention, and Fig. 4 is a sectional view taken along the line A-A in Fig. 3. Referring to Figs. 3 and 4, reference numeral 31 denotes an intermediate product of an arm used for an actuator in a disk unit (not shown). The intermediate product 31 has a plurality of arm portions 2 (2a to 2c) which are integrally molded with a resin and heat-treated at a predetermined temperature for a predetermined period of time or is allowed to sufficiently harden.

In these embodiments, the arm portions 2 have integrally-formed bush-like metal members 3a to 3c having through-holes to mount head suspensions (not shown) at their distal end portions, respectively. The arm 1 has a shaft hole 6 through which a rotation shaft extends. The arm 1 has a weld line at a portion on the outer wall of the shaft hole 6 and opposite to the distal end of the arm. A projection 7 extending in the direction perpendicular to the weld line and a projection 8 extending in the direction parallel to the weld line are formed at the outer wall of the shaft hole 6 and near the weld line. The ratio of the thickness of the inner arm portion 2b to that of each of the outer arm portions 2a and 2c.

The arm 1 is integrally molded with a thermoplastic resin by injection molding. The thermoplastic resin is a resin composition obtained by mixing 30 parts by weight of carbon fibers (aspect ratio: 4) in 100 parts by weight of a thermotropic liquid crystal copolyester (this copolyester was confirmed to exhibit optical anisotropy in the molten state by the observation with a polarizing microscope; and the melting point by DSC was 360∼C) having repeating units derived respectively from parahydroxybenzoic acid, terephthalic acid, isophthalic acid, and biphenol.

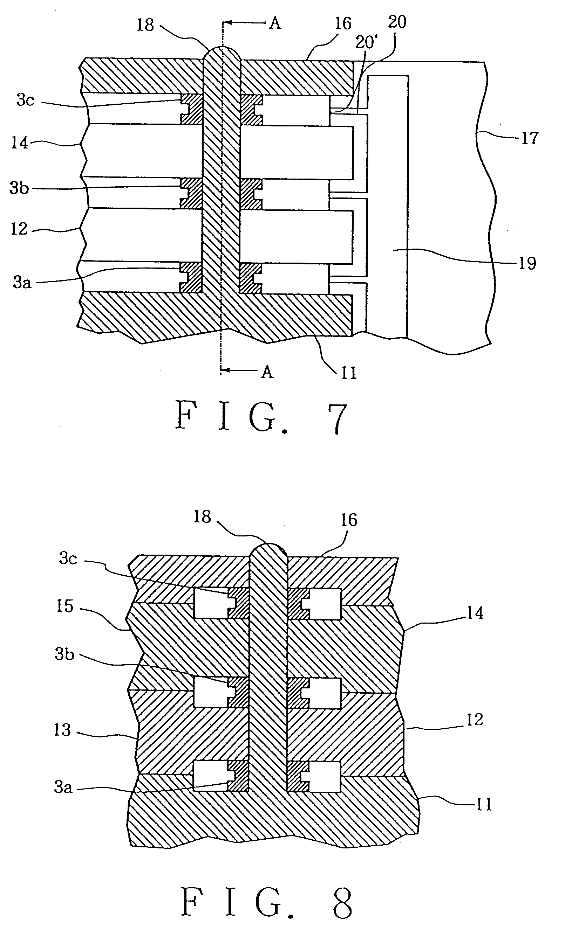

Fig. 7 is a partial sectional view of an injection molding mold which corresponds to the sectional view of Fig. 4. Fig. 8 is a sectional view taken along the line A-A in Fig. 7. As shown in Figs. 7 and 8, the mold is composed of mold portions 11 to 17. The mold portion 11 has vertical pins (not shown) for forming the inner walls of the hole 6 and a hole 9 has and a pin 18 for disposing the metal members 3a to 3c. The mold portion 17 has portions corresponding to a sprue 19, runners 20 and gates 20' and is divided along the line A-A in Fig. 1 or 3. Only one portion of the mold is illustrated in Fig. 7 and is combined with the other of the mold to constitute the sprue 19 and the runners 20. The mold portions 12, 13, 14, and 15 are also divided into the mold portions 12 and 13 and the mold portions 14 and 15 along the line A-A in Fig. 1 or 3.

In injection molding, the metal member 3a is mounted on the pin 18 and located at the lower end of the pin 18. The mold portions 12 and 13 are located on the mold portion 11 and the metal member 3a from the left and right directions viewed in Fig. 6. The metal member 3b is mounted on the pin 18 and located on the mold portions 12 and 13. The mold portions 14 and 15 are similarly located on the mold portions 12 and 13 and the metal member 3b. The metal member 3c is mounted on the pin 18 and located on the mold portions 14 and 15. The mold portion 16 is mounted on the pin 18 and located on the mold portions 14 and 15 and the metal member 3c. Finally, the halves of the two-divided mold portion 17 are located to oppose each other, and the portions corresponding to the gates 20' are inserted into the distal end portions of the remaining mold portions 11 to 16, thereby completing the assembly of mold.

When a molten resin is injected for injection molding through the sprue 19 and the runners 20 of the assembled mold, the molten resin flows from the gates 20' to the shaft hole 6 portion and runs about both the sides of the shaft hole 6 portion. The two-branched molten resin flows reach the weld line portion. During this resin flow, the resin molecules are oriented in the resin flow direction. When the resin solidifies, the resin is released from the mold by opening the mold in the order of the mold portions 16, 14, 15, 12, 13, 11, and 17, thereby obtaining an arm molding.

In this specification, a sprue and runners are intended to mean not only the hollow passages in a mold but also resin moldings formed in said passages.

At this stage, the arm portions 2a, 2b and 2c are coupled to each other through the sprue 19 and the runners 20 to constitute the arm 1. This molding is allowed to cool down and solidfy while the sprue 19 and the runners 20 are kept coupled to the arm portions. The solidified molding is released from the mold to obtain an intermediate product 1 of the arm whose arm portions are coupled to each other through the sprue and runners. The intermediate product 1 of the arm whose arm portions are coupled to each other is preferably heat-treated at a predetermined temperature for a predetermined period of time. Note that if residual stress is detected in the arm portions near the gate, the resin portion of each runner 20 may be cut at the gate position before the resin solidifies and the mold is opened in accordance with the intra-mold gate cut method as previously described, thereby removing the runners and the sprue. The sprue 19 and the runners 20 are cut from the intermediate product of the arm whose arm portions are coupled to each other, thereby obtaining an arm.

The temperature for the heat treatment is an arbitrary temperature ranging from room temperature to the thermal deformation temperature of the resin. Preferably, the heat-treatment temperature falls within a range of temperature range of temperatures which exceed the mold temperature and are equal to or lower than a temperature higher than the mold temperature by 100°C.

The heating means can be a simple one and normally an air bath using an appropriate oven. The heating means can also be a liquid bath using a solvent inert to the resin. The heating time is appropriately determined in consideration of changes in physical properties such as dimensions and normally falls within a range of 10 minutes to 5 hours. The liquid bath generally requires a shorter heating time than that of the air bath. According to the present invention, the above heat treatment is performed while the resin coupling portions such as the runners and the sprue are kept coupled to the arm portions. In addition, a known fixing means such as a fixing jig can be appropriately used to fix the intervals between the arms 2a, 2b and 2c, after which the heat treatment can also be performed. After the heat treatment, the product is gradually cooled to room temperature.

The resultant arm has a linear expansion coefficient close to that of a metal because the resin molecules are oriented as described above. More specifically, since the resin is ejected from a portion corresponding to the distal end of each arm portion to be moled, the resin molecules are oriented in the longitudinal direction of the arm portions, and the linear expansion coefficient in this direction is smaller than that in the lateral direction (perpendicular direction). This tendency is pronounced in the thermotropic liquid crystal polymer. The linear expansion coefficient of the arm portion in this liquid crystal polymer is particularly small for a resin and is close to that of a metal. The small linear expansion coefficient makes it possible to increase the dimensional accuracy. The important dimensional accuracy of the arm of the actuator is required in the longitudinal direction. It is greatly advantageous to obtain high dimensional accuracy in the longitudinal direction. When an actuator is composed of this arm, the actuator has high dimensional accuracy with respect to the metal portion and has high rigidity. The shape of the projection 7 is altered appropriately, and a coil portion is molded on the projection 7 with a resin. Therefore, the coil portion can be integrally formed with the arm with high rigidity.

In addition, since the conductivity of the carbon fibers is sufficiently exerted, the surface resistance of the arm is very low.

In the embodiment shown in Figs. 1 and 2, the gate is cut before the molding is removed from the mold and then the molding is supported and fixed by an appropriate method until the arm portions thereof solidify.

In the embodiment shown in Figs. 3 and 4, the arm portins are each connected to the sprue at the distal end of the arm portion and, however, they may be connected to each other at a plurality of portions thereof although they may usually be connected to each other only at one connection portion. The connection portions are composed of the runners and the sprue, but another preferable connection portion may be provided using either the runners or the sprue.

The connectin portions composed of the sprue, runners, etc. serve to connect the arm portions with each other. The relative positional displacements between the arm portions can be reduced due to the presence of these connection portions. For example, deformation caused by an ejector pin for mold release can also be reduced. The structure of the connection portions composed of the sprue and or the runners may have a length, width, thickness, and the like enough to lessen the deformation of the arm portions owing to the reinforcing effects exerted by the connection portions. The connection portions are preferably equal to the arm portions in thickness, respectively, from the manufacturing viewpoint.

A runner and a sprue are used in normal injection molding. However, there may also be obtained a molding without having a runner, a sprue, etc., form connection portions, depending on the arrangement of gates and the use of other molding methods. For example, in a mold, a gate is not formed at the distal end of an arm portion to be molded, but formed on a pivot hole 6 (so-called rotary carriage) side to be molded, which is opposite to the distal end of the to-be-molded arm portion, and a resin is injected through a runner, a sprue, and the gate. In this case, the mold has such a structure that a plurality of arm portions can be connected by the connection portions. When injection molding is started from the hole 6 side using this mold, there will be obtained an intermediate product of an actuator having resin connection portions according to the present invention (the apparent shape of the intermediate product being similar to that shown in Fig. 2). The connection or coupling portions are then cut to obtain an actuator. This method is also one of methods of manufacturing an intermediate product of an actuator according to the present invention. In this case, the connection portions must be separately formed, independently of the runners, etc. as a matter of course.

It is preferable to adopt a molding method wherein a runner, a sprue or both constitute a connection portion. For example, as in the above embodiment, it is preferable that a gate be formed at the distal end or its vicinity of each arm portion to be molded in a mold, and a molten resin be injected from a common sprue through runners and gates to cavities for forming the arm portions. The connection portions formed in the sprue and runners of the mold are cut and removed after they are heat treated or the molten resin sufficiently solidifies. Therefore, if the connection portions are formed of the runner, the sprue or both, these portions are originally meant to be cut and removed. They will advantageously dispense with providing other special connection portions.

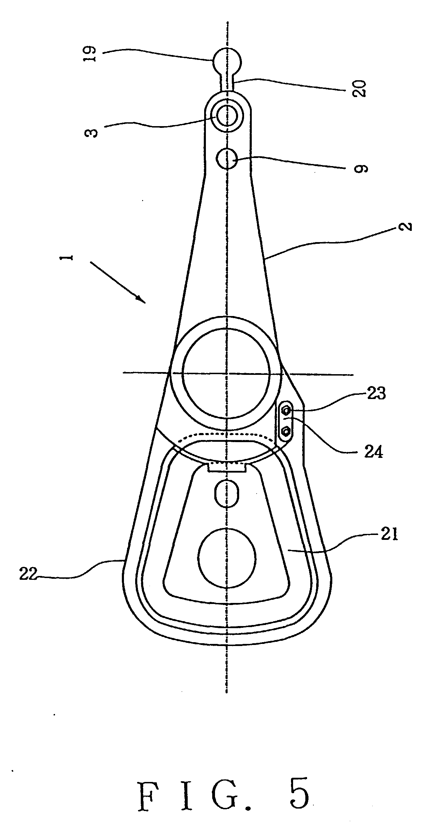

It is possivle to fix and integrate a movable coil simultaneously with molding an arm by effecting injection molding so that the peripheral portion of the movable coil is surrounded with a resin simultaneously with molding the arm and, if necessary, coil wire connection terminal pins are buried with the resin. Fig. 5 is a plan view showing an actuator thus manufactured according to another embodiment of the present invention. In this case, a coil 21 and terminal pins 23 connected thereto or its holder 24 are set in the mold, a molten resin is injected from the distal end portion of each arm portion 2 to be molded, as described above, and the molten resin is flowed to the peripheral portion of the coil 21, thereby simultaneously and integrally molding a portion 22 which holds the coil 21.

An actuator can therefore be manufactured by a method using a small number of materials and a small number of manufacturing steps.

### Example 1

75 wt% of a wholly aromatic polyester resin (thermotropic liquid crystal polymer, which exhibits liquid crystal properties in the molten state) containing as substantial main components 4-hydroxybenzoic acid, biphenol and terephthalic acid, and 35 wt% of carbon fibers were melted and kneaded together to prepare a molding material (a).

Such a mold as shown in Figs. 7 and 8 was used to obtain a molding as shown in Figs. 3 and 4 using the molding material (a) at a mold temperature of 80°C and an injection temperature of 350°C.

The molding so obtained was heat treated at 100°C for an hour in a commercially available annealing oven (PHH-100 available from TABAI SEISAKUSHO (K.K.)) without removing the sprue 19 and runners 20. The molding so heat treated was then gradually cooled to room temperature to obtain an intermediate product of an arm.

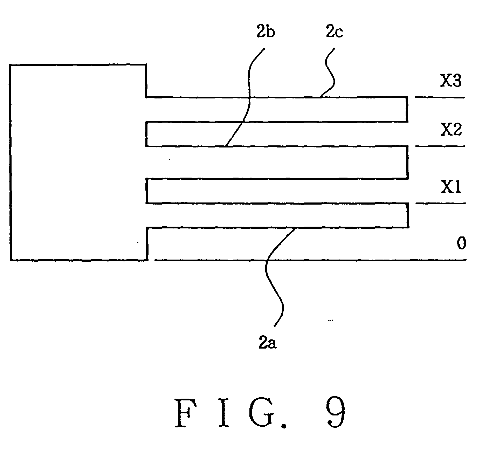

Heights X1, X2, and X3 of the upper surfaces of the distal ends of arm portions 2a, 2b, and 2c when the height of the lower end of the arm is defined as zero as shown in Fig. 9 were measured by a laser dimension measuring unit (LS-3100/3032 available from KEYENCE). Errors (dimensional errors) ΔX1, ΔX2, and ΔX3 of the measured values with respect to reference values SX1 = 2.908 mm, SX2 = 6,401 mm, and SX3 = 9.703 mm were obtained. Values as the reference values were determined from the dimensions of the mold used.

The results are shown in the row of Example 1 in Table 1 together with the mold temperature and the annealing conditions.

### Example 2

The procedure of Example 1 was followed except that the heat-treatment temperature was set to 140°C thereby to obtain an intermediate product which was measured for dimensional errors. The results are shown in the row of Example 2 in Table 1.

### Example 3

The procedure of Example 2 was followed except that the mold temperature was set to 120°C thereby to obtain an intermediate product which ws measured for dimensional errors with the results being shown in the row of Example 3 in Table 1.

### Example 4

A molten polyester resin containing as substantial main components terephthalic acid and 1,4-butanediol was mixed with 15 wt% of glass fibers and 20 wt% of carbon fibers, and the resultant mixture was kneaded to obtain a molding material (b).

The procedure of Example 1 was followed using this material (b) except that the mold temperature was set to 50°C thereby to obtain a molding.

A heat treatment was performed on this molding by following the same procedures as in Example 1 except that the heat-treatment temperature was set to 80°C, thereby obtaining an intermediate product of an arm.

The dimensional errors of this intermediate product were measured by following the same procedures as in Example 1, and the results are shown in the row of Example 4 in Table 1.

### Example 5

The procedure of Example 4 was followed except that the heat-treatment time was set to 5 hours thereby to obtain an intermediate product which was measured for its dimensional errors. The results are shown in the row of Example 5 in Table 1.

### Example 6

The procedure of Example 4 was followed except that the heat-treatment temperature was set to 80°C thereby to obtain an intermediate product which was then measured for its dimensional errors with the results being shown in the row of Example 6 in Table 1.

### Comparative Examples 1 - 6

The procedures of Examples 1-6 were followed except that the sprues were cut off by cutting them at the runner portions from the moldings prior to the heat treatment thereof thereby to obtain intermediate products, respectively. The thus obtained products were measured for its dimensional errors. The results are shown in the rows of Comparative Examples 1 to 6 in Table 1, respectively.

As is apparent from Table 1, the intermediate products of Examples 1 to 6 which were annealed while the sprues were kept connected exhibited better dimensional accuracies than any other intermediate products.

A better effect is obtained when there is used the material (a) which is the thermotropic liquid crystal resin.

It was confirmed that the products of the respective Examples with sprues did not change in dimensional accuracies even when measured later than the sprues were cut off and removed as in the Comparative Examples after the dimensional measurements had been mede.

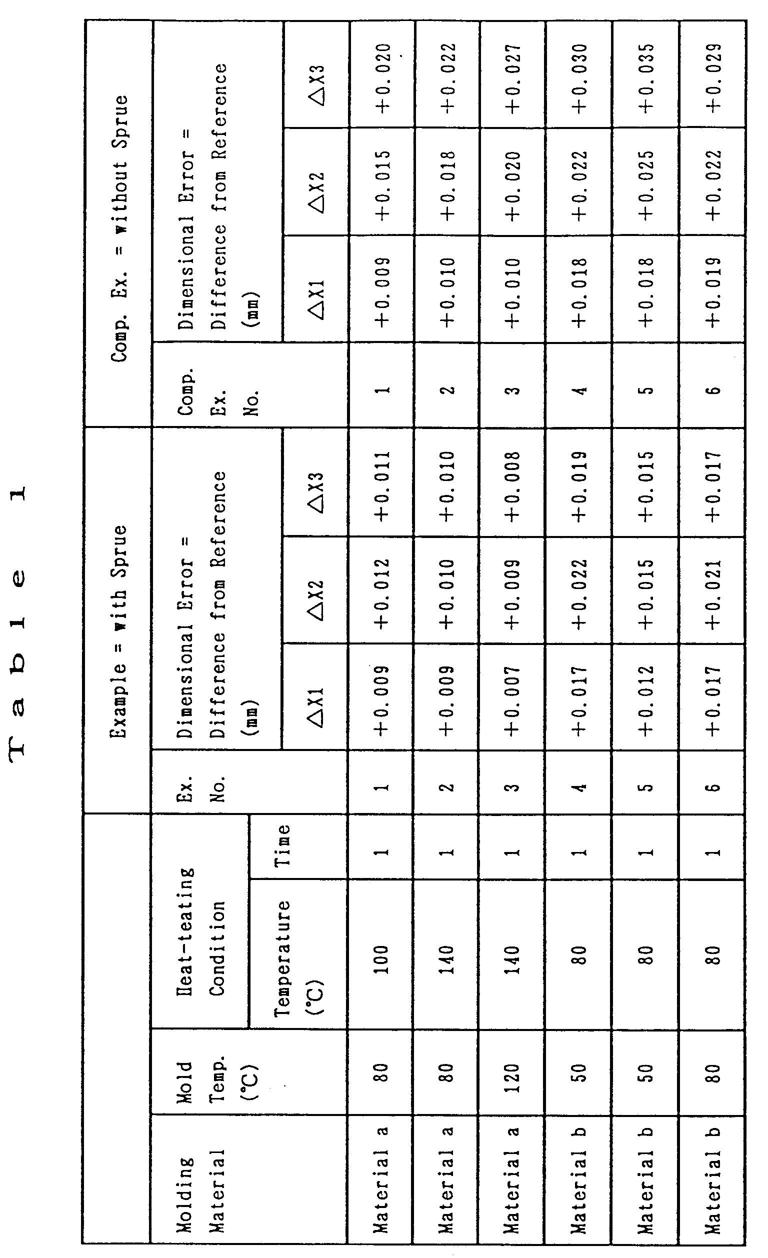

### Effect of the Invention

As has been described above, according to the present invention, since a molten thermoplastic resin is simultaneously and in parallel filled in a plurality of cavity portions respectively corresponding to a plurality of arm portions to mold the molten resin simultaneously and integrally into the respective arm portions whereby arm portions can each be uniformed as a whole, uniformity between the arm portions can be achieved, and an arm excellent in relative positional accuracy between the arm portions can be manufactured. Thus, the arm portions need not be stacked to shorten the manufacturing process, and at the same time the positional accuracy between the arm portions can be improved thereby to increase the yield.

The gate is cut before the molding is withdrawn from the mold thereby to eliminate the influence of residual stress and increase the molding in strength and dimensional accuracy.

Injection molding is adopted herein as a means for molding, and the thermoplastic resin is ejected from the distal end portion of each arm portion to be molded, whereby the dimensional accuracy and rigidity of an arm to be obtained can be increased.

A weld line is formed at a portion opposite to the distal end of the arm and on the outer wall of a shaft hole through which a rotating shaft extends, and a projection extending in a direction perpendicular or parallel to the weld line is formed near the weld line whereby the rigidity of the weld line portion can be increased.

Heat treatment is performed on the molding whose arm portions are kept connected to each other whereby the heat treated arm is enabled to prevent itself from deformation and warping caused by cutting off the connectin portions from the molding, to increase the arm portions in positional accuracy therebetween and to improve the yield accordingly.

The presence of the connection portions provides a reinforcing action to increase the molding in rigidity and decrease the molding in deformation or the like caused by an ejector pin when the molding is released from the mold.

## Claims

1. A method of manufacturing an arm having a plurality of arm portions for an actuator in a disk unit by simultaneously and integrally injection molding a thermoplastic resin in the molten state into said arm portions in a mold having gates for passing the resin therethourgh, characterized by simultaneously and in parallel filling a thermoplastic resin in the molten state in cavity portions respectively corresponding to the arm portions to be molded.

2. A method of manufacturing an arm having a plurality of arm portions for an actuator in a disk unit by simultaneously and integrally injection molding a thermoplastic resin in the molten state into said arm portions, characterized by simultaneously and in parallel filing a thermoplastic resin in the molten state in cavity portions respectively corresponding to the to-be-molded arm portions structurally having connection portions therebetween.

3. A method of manufacturing an arm according to claim 1, characterized in that the gates are cut in the mold prior to removal of its molding from said mold.

4. A method of manufacturing an arm according to claim 1, characterized in that the thermoplastic resin is a thermotropic liquid crystal polymer.

5. A method of manufacturing an arm having a plurality of arm portions and used for an actuator in a disk unit, comprising simultaneously and integrally molding at least said arm portions with a thermoplastic resin when injection molding said arm with the thermoplastic resin, the thermoplastic resin being injected from a position corresponding to the distal end portion of each arm portion to be molded in a mold.

6. A method of manufacturing an arm according to claim 5, characterized in that said arm has a shaft hole through which a rotation shaft extends, said arm has a weld line at a portion which is oppoosite to the distal end portion of said arm portions and is on the outer wall of the shaft hole, and a projection extending in a direction perpendicular or parallel to the weld line is formed near the weld line.

7. An intermediate product of a thermoplastic resin-made arm for an actuator, characterized in that there is formed at least one resin connection portion which connects the arm portions of the arm and is to be cut off or removed therefrom.

8. An intermediate product of a thermoplastic resin-made arm for an actuator, characterized in that there is formed at least one resin connection portion which connects the arm portions of the arm and is to be cut off or removed therefrom, and said intermediate product is heat treated at a predetermined temperature for a predetermined period of time.

9. An intermediate product of an arm according to claim 7 or 8, characterized in that said resin connection portion is a resin portion which has been present in a resin injection route in injection molding.

10. An intermediate product of an arm according to claim 9, characterized in that said resin portion connnects portions which are near the distal ends of the arm portions.

11. A method of manufacturing an arm, comprising the steps of injection molding a resin into a molding of an arm whose arm portions are connected to each other with resin portions unnecessary for an arm product, which are injection molded simultaneously with injection molding of said arm including said arm portions, withdrawing said arm molding from a mold, heat treating said molding so withdrawn at a predetermined temperature for a predetermined period of time while said unnecessary resin portions are kept connected to said arm portions, thereby obtaining an intermediate product of said arm, and cutting off said unnecessary resin portions from said intermediate product.

12. An actuator comprising an arm obtained by cutting off the unnecessary resin portions from the intermediate product as defined in claim 7 or 8, and a coil fixed to said arm to apply a force for swinging said arm to said arm.

13. A method of manufacturing an actuator, comprising the steps of injection molding a resin into a molding of an arm whose arm portions are connected by resin portions unnecessary for an arm product, which are injection molded simultaneously with injection molding of said arm including said arm portions together with a coil for swinging said arm set in a mold, withdrawing said arm from said mold, heat-treating said molding so withdrawn at a predetermined temperature for a predetermined period of time while said unnecessary resin portions are kept connected to said arm portions, thereby obtaining an intermediate product of said arm, and cutting said unnecessary resin portions from said intermediate product.
